# EUROPEAN PATENT SPECIFICATION

(11) **EP 1 045 016 B1**
(45) Date of publication and mention of the grant of the patent: **14.04.2004**
(21) Application number: 99951178.5
(22) Date of filing: 29.10.1999
(51) Int. Cl.: C09J 7/04, C09J 7/02

(54) **WOUND ADHESIVE TAPE**
AUFGEROLLTES KLEBEBAND
BANDE ADHESIVE ENROULEE

(30) Priority: 30.10.1998 JP 31010198
(43) Date of publication of application: 18.10.2000
(73) Proprietor: SLIONTEC CORPORATION, Kanagawa 214-0014 (JP)
(72) Inventor: YOSHIMURA, Shinji Sliontec Corporation, Kawasaki-shi Kanagawa 214-0014 (JP); SUITSU, Daisuke Sliontec Corporation, Kawasaki-shi Kanagawa 214-0014 (JP)
(74) Representative: Calderbank, Thomas Roger
(86) International application number: PCT/JP1999/006064
(87) International publication number: WO 2000/026316

(56) References cited:
- JP-A- 9 255 926
- JP-U- 62 129 043
- US-A- 5 269 421

## Description

### TECHNICAL FIELD

The present invention relates to an adhesive tape and, in particular, to a wound adhesive tape which is convenient for carrying and using and is excellent in a storage efficiency and a transport efficiency.

### BACKGROUND ART

Conventionally, an adhesive tape is wound around a ring like core made of paper or plastic and is formed like a doughnut and is then packaged with a packaging material and is supplied to a market.

However, such an adhesive tape formed like a doughnut has a large cylindrical space inside itself and hence is not convenient for carrying and is low in storage efficiency and a transport efficiency in terms of thickness and size to thereby present problems in these points.

For this reason, in order to solve these problems, a wound adhesive tape characterized in that an adhesive tape is wound around the outer peripheral surface of a ring like core formed in "a nearly flat shape" and having a relatively thin thickness with an adhesive surface inside is disclosed in Japanese Utility Model Laid- Open No. 51-148383, Japanese Utility Model Laid- Open No. 4- 123233, and USP No. 5269421. Here, a phrase of "a nearly flat shape" means a shape formed when a cylindrical body is crushed in the direction perpendicular to the axis of the cylinder body.

A core made of paper, plastic, or metal and formed in a nearly flat shape is used as the above mentioned wound adhesive tape. The core needs to have some degree of strength because an adhesive tape is wound around its outer peripheral surface with an adhesive surface inside usually more than 5 m. Accordingly, the core needs to be manufactured into a strong ring like body formed in a nearly flat shape with the above mentioned material having a thickness of 1 mm or more, which results in increasing a manufacturing cost and the price of the wound adhesive tape.

Also, the wound adhesive tape presents a problem in usability that it is difficult to rewind the wound adhesive tape because the core formed in a nearly flat shape is stiff and the space inside the core is too narrow for a finger to be inserted.

JP-A-09-255926 disclosed pressure sensitive adhesive tape obtained by winding a pressure sensitive adhesive single coated tape around an elliptic core material having a thickness of 0.3mm or more.

It is the object of the present invention to solve the problems that the above conventional technologies have and to provide at a low price a wound adhesive tape which is convenient for carrying and using and is excellent in a storage efficiency and a transport efficiency.

### DISCLOSURE OF INVENTION

The present invention aims to solve the above mentioned problems.

A first aspect of the present invention provides a wound adhesive tape comprising a ring-like body made of a sheet-like material and formed in a nearly flat shape of the type formed when a cylindrical body is crushed in the direction perpendicular to the axis of the cylinder body; and an adhesive tape wound around the outer peripheral surface of the ring like body with an adhesive surface inside;
wherein the sheet-like material has a thickness of 10µm to 100µm and is deformable by insertion of a finger inside the ring like body.

Preferably, the above mentioned deformable sheet like material is a material comprising at least one of a paper sheet, a plastic film, or a metal foil.

Preferably, the ring like body formed in a nearly flat shape has something printed on the inner peripheral surface thereof.

A second aspect of the present invention provides a method of manufacturing a wound adhesive tape according to the first aspect of the invention comprising the steps of: -
winding a deformable sheet-like material around the outer peripheral surface of a ring-like core made of a plastic plate having a nearly flat shape of the type formed when a cylindrical body is crushed in the direction perpendicular to the axis of the cylinder body;
winding an adhesive tape around the outer peripheral surface of the ring like body and removing the ring like core.

An embodiment of the present invention will now be described with reference to the accompanying drawings in which:-
FIG. 1 is a perspective view showing the constitution of a wound adhesive tape in accordance with the present invention.
FIG. 2 is a perspective view showing a state in a process of manufacturing a wound adhesive tape in accordance with the present invention.

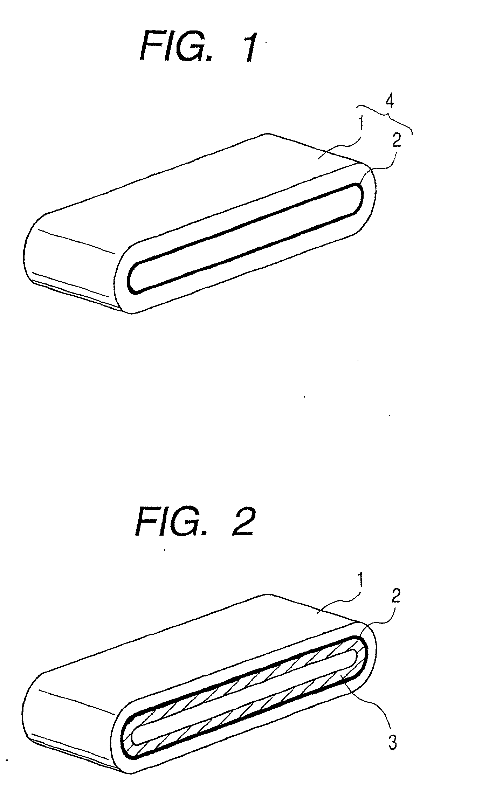

FIG. 1 is a perspective view showing the constitution of a wound adhesive tape in accordance with the present invention. In FIG. 1, a reference number 2 designates a ring like body formed in a nearly flat shape, the ring like body being made by forming a printed paper in a ring with the printed surface of the printed paper inside and with parts of the printed paper overlaid on each other. An adhesive tape 1 is wound around the outer peripheral surface of the printed paper formed in such a shape with an adhesive surface inside to thereby constitute a wound adhesive tape 4 in accordance with the present invention.

A method of manufacturing a wound adhesive tape in accordance with the present invention will be specifically described with reference to the following specific embodiment.

### (Preferred Embodiment)

FIG. 2 is a perspective view showing a state in a process of manufacturing a wound adhesive tape in accordance with the present invention.

A printed paper having the name of a maker or the like on one surface thereof and having a thickness of 70 µ m was wound around the outer peripheral surface of a ring-like core 3 made of a plastic plate having a width of 50 mm, a length of 80 mm, and a thickness of 2 mm and formed in a nearly flat shape with the printed surface inside and with parts of the printed paper overlaid on each other to adhesive surface inside. Then, the above ring like core 3 thereby constitute a ring- like body 2 formed in a nearly flat shape. Further, around the outer peripheral surface of the ring like body 2 formed in a nearly flat shape was wound an adhesive tape 1 having a length of 5 m with an adhesive surface inside. Then, the above ring like core 3 is removed to make a wound adhesive tape 4 (see FIG. 1).

While a printed paper having a thickness of 70 µm was wound around the outer peripheral surface of the ring like core 3 to make the ring like body 2 in the present preferred embodiment, it is preferable that a sheet like material wound around the outer peripheral surface of the ring like core 3 is a paper sheet, a plastic film, or a metal foil having a thickness of 10 µm to 100 µm. Also, it is recommended that a laminate of these materials be used. If the thickness of the sheet like material is smaller than 10µm, the mechanical strength of the sheet like material is not sufficient and if the thickness of the sheet like material is larger than 100 µm, the stiffness of the sheet like material becomes high, which makes it difficult to wind the sheet like material around the ring like core 3.

A wound adhesive tape 4 in accordance with the present invention, as shown in FIG. 1, does not have the above mentioned ring like core 3 and comprises an adhesive tape 1 directly wound around the outer peripheral surface of the ring like body 2 made of the above mentioned printed paper. Therefore, the wound adhesive tape 4 in accordance with the present invention is manufactured at a low cost and is easy to rewind and is excellent in usability because when the wound adhesive tape 4 is rewound, the ring like body 2 made of the printed paper is flexible and is easily deformed and hence a finger can be inserted inside the ring like body 2 by deforming the ring like body 2.

Further, the wound adhesive tape 4 in accordance with the present invention is made of a printed paper wound with the printed surface inside and hence the name of a maker or the like can be printed thereon.
Still further, the wound adhesive tape 4 in accordance with the present invention, as shown in FIG. 1, is small in size and is formed in a nearly flat shape like a nearly rectangular plate and, therefore, is convenient for carrying and is also excellent in a storage efficiency and a transport efficiency.

### INDUSTRIAL APPLICABILITY

As described up to this point, putting the present invention into practice makes it possible to provide at a low price a wound adhesive tape which is convenient for carrying and using and is excellent in a storage efficiency and a transport efficiency.

## Claims

1. A wound adhesive tape (4) comprising a ring-like body (2) made of a sheet-like material and formed in a nearly flat shape of the type formed when a cylindrical body is crushed in the direction perpendicular to the axis of the cylinder body; and an adhesive tape (1) wound around the outer peripheral surface of the ring like body (2) with an adhesive surface inside;
**characterised in that** the sheet-like material has a thickness of 10µm to 100µm and is deformable by insertion of a finger inside the ring like body (2).

2. A wound adhesive tape (4) as claimed in claim 1, wherein the sheet-like material is a material comprising at least one of a paper sheet, a plastic film, or a metal foil.

3. A wound adhesive tape as claimed in claim 1, wherein the ring-like body (2) formed in a nearly flat shape has something printed on the inner peripheral surface thereof.

4. A method of manufacturing a wound adhesive tape according to any one of claims 1 to 3 comprising the steps of: -
winding a deformable sheet-like material (2) around the outer peripheral surface of a ring-like core (3) made of a plastic plate having a nearly flat shape of the type formed when a cylindrical body is crushed in the direction perpendicular to the axis of the cylinder body;
winding an adhesive tape (1) around the outer peripheral surface of the ring like body and removing the ring like core (3).

## Patentansprüche

1. Aufgewickeltes Klebeband (4), umfassend einen ringartigen Körper (2) aus einem bahnartigen Material, der zu einer annähernd flachen Gestalt des Typs geformt ist, die gebildet wird, wenn ein zylindrischer Körper in Richtung senkrecht zur Achse des zylindrischen Körpers zusammengedrückt wird; und ein Klebeband (1), das um die Außenumfangsfläche des ringartigen Körpers (2) gewickelt ist, wobei sich eine Klebefläche innen befindet;
**dadurch gekennzeichnet, dass** das bahnartige Material eine Dicke von 10 µm bis 100 µm aufweist und durch Einschieben eines Fingers in den ringartigen Körper (2) verformbar ist.

2. Aufgewickeltes Klebeband (4) nach Anspruch 1, worin das bahnartige Material ein Material ist, das zumindest eines aus einem Papierblatt, einer Kunststofffolie oder einer Metallfolie umfasst.

3. Aufgewickeltes Klebeband nach Anspruch 1, worin auf die innere Umfangsfläche des zu einer annähernd flachen Gestalt geformten ringartigen Körpers (2) etwas aufgedruckt ist.

4. Verfahren zur Herstellung eines aufgewickelten Klebebandes nach einem der Ansprüche 1 bis 3, folgende Schritte umfassend:
das Wickeln eines verformbaren bahnartigen Materials (2) um die Außenumfangsfläche eines ringartigen Kerns (3), hergestellt aus einer Kunststoffplatte, mit einer annähernd flachen Gestalt des Typs, der gebildet wird, wenn ein zylindrischer Körper in Richtung senkrecht zur Achse des zylindrischen Körpers zusammengedrückt wird;
das Wickeln eines Klebebands (1) um die Außenumfangsfläche des ringartigen Körpers und das Entfernen des ringartigen Kerns (3).

## Revendications

1. Ruban adhésif enroulé (4) comprenant un corps semblable à un anneau (2) fait d'un matériau semblable à une feuille et ayant une forme presque plate du type obtenu lorsqu'un corps cylindrique est aplati dans la direction perpendiculaire à l'axe du corps cylindrique ; et un ruban adhésif (1) enroulé autour de la surface périphérique extérieure du corps semblable à un anneau (2) avec une surface adhésive à l'intérieur ;
**caractérisé en ce que** le matériau semblable à une feuille a une épaisseur de 10 µm à 100 µm et est déformable par insertion d'un doigt à l'intérieur du noyau semblable à un anneau (2).

2. Ruban adhésif enroulé (4) selon la revendication 1, dans lequel le matériau semblable à une feuille est un matériau comprenant au moins l'un d'une feuille de papier, d'un film plastique ou d'une feuille métallique.

3. Ruban adhésif enroulé selon la revendication 1, dans lequel le corps semblable à un anneau (2) ayant une forme presque plate a quelque chose d'imprimé sur la surface périphérique intérieure de celui-ci.

4. Procédé de fabrication d'un ruban adhésif enroulé selon l'une quelconque des revendications 1 à 3 comprenant les étapes consistant à :
enrouler un matériau semblable à une feuille déformable (2) autour de la surface périphérique extérieure d'un noyau semblable à un anneau (3) fait d'une plaque de plastique ayant une forme presque plate du type obtenu lorsqu'un corps cylindrique est aplati dans la direction perpendiculaire à l'axe du corps cylindrique ;
enrouler un ruban adhésif (1) autour de la surface périphérique extérieure du corps semblable à un anneau et à retirer le noyau semblable à un anneau (3).
